# EUROPÄISCHE PATENTSCHRIFT

(11) **EP 1 513 251 B1**
(45) Veröffentlichungstag und Bekanntmachung des Hinweises auf die Patenterteilung: **19.12.2018**
(21) Anmeldenummer: 04017472.4
(22) Anmeldetag: 23.07.2004
(51) Int. Cl.: H02P 9/00, H02P 9/42, H02P 9/48

(54) **Verfahren und Vorrichtung zum Betrieb einer doppelt gespeisten Drehstrommaschine als Generator in einer Windkraftanlage**
Method and device for operating double fed ac machine as generator in a wind power station
Procédé et dispositif d'exploitation d'une machine à courant alternatif à double alimentation en tant que génératrice dans une éolienne

(30) Priorität: 25.07.2003 DE 10334051
(43) Veröffentlichungstag der Anmeldung: 09.03.2005
(73) Patentinhaber: Siemens Aktiengesellschaft, 80333 München (DE)
(72) Erfinder: Seehuber, Michael, Dr.-Ing., 94032 Passau (DE); Mehl, Tobias, Dipl.-Ing., 94152 Neuhaus am Inn (DE); Wiesbauer, Jose, Ing., 5280 Braunau am Inn (AT)

(56) Entgegenhaltungen:
- DE-A1- 10 117 212
- US-A1- 2003 052 643
- EHRENBERG J ET AL: "WINDKRAFTANLAGEN FUER DEN MEGAWATT-BEREICH DIGITALE STEUERUNG EINES DOPPELT GESPEISTEN ASYNCHRONGENERATORS OHNE LAGEGEBER, TEIL 1", ELEKTRONIK, W E K A FACHZEITSCHRIFTEN-VERLAG GMBH, DE, Bd. 50, Nr. 18, 4. September 2001 (2001-09-04), Seiten 60-67, XP001168391, ISSN: 0013-5658

## Beschreibung

Verfahren und Vorrichtung zum Betrieb einer doppelt gespeisten Drehstrommaschine, insbesondere in einer Windkraftanlage Die Erfindung betrifft ein Verfahren zum Betrieb einer doppelt gespeisten Drehstrommaschine, als Generator in einer Windkraftanlage, mit einem Gleichspannungszwischenkreisumrichter im Rotorkreis, ein Verfahren zum Betrieb einer Windkraftanlage mit einer doppelt gespeisten Drehstrommaschine und eine Windkraftanlage mit einem Drehstromgenerator und einem Gleichspannungszwischenkreisumrichter im Rotorkreis.

Die Erfindung betrifft insbesondere ein Verfahren zum Betrieb einer doppelt gespeisten Drehstrommaschine mit Schleifringläufer und einem Frequenzumrichter im Rotorkreis für einen drehzahlvariablen Betrieb sowie ein entsprechendes Verfahren zum Betrieb einer Windkraftanlage mit doppelt gespeistem Drehstromgenerator mit Schleifringläufer und einem Frequenzumrichter im Rotorkreis.

Doppelt gespeiste Drehstrommaschinen mit Schleifringläufer und einem Frequenzumrichter im Rotorkreis werden in erster Linie und typischerweise als Generatoren in Windkraftanlagen mit variabler Betriebsdrehzahl eingesetzt. Die variable Betriebsdrehzahl wird dabei entsprechend den Windverhältnissen erzielt, beispielsweise durch eine Verstellung, vorzugsweise eine stufenlose Verstellung des Anstellwinkels der Rotorblätter. Der Umrichter im Rotorkreis des Generators besteht beispielsweise aus zwei Pulswechselrichtern, die über einen Gleichspannungszwischenkreis miteinander verbunden sind. Der Stator der doppelt gespeisten Drehstrommaschine ist über einen Leistungsschalter direkt an das Stromnetz geschaltet. Die Regelung der Windkraftanlage erfolgt über den Umrichter, der die nötige Differenzfrequenz in Amplitude und Phasenlage für die entsprechende Rotordrehzahl erzeugt. Durch die Leistung des Umrichters ist der nutzbare Drehzahlbereich des Generators und damit der Windkraftanlage vorgegeben. In der Regel ergibt sich bei derartigen Anwendungen ein Drehzahlstellbereich von +/- 30 bis +/- 35% der Synchrondrehzahl.

Speziell bei Windkraftanlagen höherer Leistung ist auch bei schwachem Wind noch eine beachtliche Windleistung zu erzielen, die aber mit dem herkömmlichen Betriebsverfahren der doppelt gespeisten Drehstrommaschine nicht wirtschaftlich genutzt werden kann, da die notwendige Vergrößerung der Umrichterspannung bei niedrigen Drehzahlen zu sehr hohe Eisenverlusten des Stators am Stromnetz führt. Die erzeugbare elektrische Energie wird dann kleiner als die vom Stator aus dem Netz aufgenommene Energie. Gleichzeitig müsste der Umrichter in seiner Dimensionierung deutlich größer ausgeführt werden, um den Regelbereich zu erweitern.

Aus der DE 101 17 212 A1 ist ein Verfahren zum Betrieb einer Windenergieanlage bekannt. Das Verfahren zum Betrieb einer Windenergieanlage soll auch bei schwachem Wind die wirtschaftliche Erzeugung elektrischer Energie mit einem Drehstromgenerator mit einem GleichspannungszwischenkreisUmrichter im Rotorkreis für einen drehzahlvariablen Generatorbetrieb ermöglichen. Dies kann dadurch erreicht werden, dass der Drehstromgenerator bei normalen Windverhältnissen im Normalbetrieb als doppeltgespeiste Asynchronmaschine betrieben und bei geringem Wind außerhalb seines untersynchronen Arbeitsbereiches durch Trennen seines Stators vom Stromnetz und Kurzschließen desselben über einen dreiphasigen Schlupfwiderstand zu einer einfachen Asynchronmaschine umgeschaltet und als solche betrieben wird.

Aus der US 2003/0052643 A1 ist eine bürstenlose doppelt gespeiste Induktionsmaschine mit zwei mehrphasigen Statorwicklungen und eine Regelung dafür bekannt. Die vorgeschlagene Regelung ist dazu vorgesehen, die doppelt gespeiste Induktionsmaschine in verschiedenen Modi zu betreiben. Im Schwachlastbereich kann die Maschine auch mit einer kurzgeschlossenen Statorwicklung betrieben werden.

Aufgabe der Erfindung ist es, den Stellbereich einer doppelt gespeisten Drehstrommaschine zu erweitern und insbesondere für Windkraftanlagen einen wesentlich vergrößerten Stellbereich zu erhalten, der wirtschaftlich genutzt werden kann, ohne dabei die Dimensionierung des Umrichters im Rotorkreis verändern und insbesondere vergrößern zu müssen.

Erfindungsgemäß wird diese Aufgabe durch die Merkmale der Ansprüche 1, 6 und 7 gelöst. Vorteilhafte Weiterbildungen sind in den Unteransprüchen beschrieben. Durch die Erfindung wird der Drehzahlstellbereich der Drehstrommaschine erweitert.

Erfindungsgemäß wird bei einem Verfahren der eingangs angegebenen Art zum Betrieb einer doppelt gespeisten Drehstrommaschine die Drehstrommaschine bei normaler Leistung als doppelt gespeiste Asynchronmaschine und bei geringer Leistung als Asynchronmaschine mit Kurzschlussläufer betrieben. Bei einem Verfahren zum Betrieb einer Windkraftanlage mit einer doppelt gespeisten Drehstrommaschine mit einem Gleichspannungszwischenkreisumrichter im Rotorkreis wird die doppelt gespeiste Drehstrommaschine nach dem erfindungsgemäßen Verfahren betrieben. Eine Windkraftanlage mit einem Drehstromgenerator und einem Gleichspannungszwischenkreis im Rotorkreis ist erfindungsgemäß gekennzeichnet durch eine Umschalteinrichtung zur Umschaltung von einem Betrieb als doppelt gespeiste Asynchronmaschine auf einen Betrieb als Asynchronmaschine mit Kurzschlussläufer.

Gemäß der Erfindung wird eine doppelt gespeiste Asynchronmaschine als Generator einer Windenergie-Anlage bei normalem Betrieb als normale doppelt gespeiste Asynchronmaschine betrieben. Bei geringem Wind außerhalb des wirtschaftlichen untersynchronen Arbeitsbereichs der doppelt gespeisten Drehstrommaschine wird der Rotor von seinem Umrichter getrennt und über eine entsprechende Schalteinrichtung kurzgeschlossen, wodurch der Rotor zu einem Kurzschlussläufer wird. Gleichzeitig wird die Statorwicklung vom Netz getrennt und über den vorhandenen Umrichter des Rotorkreises wieder ans Netz geschaltet. In dieser Anordnung arbeitet der Umrichter nun als Vollumrichter. Die Asynchronschleifringläufermaschine wird als normale Asynchronmaschine mit Kurzschlussläufer (Kurzschlussläufer-Asynchronmaschine) betrieben. Der motorseitige Umrichter arbeitet als Hochsetzsteller. Als Hochsetzstellerdrossel wird die Induktivität der Maschine verwendet.

Dadurch wird ein wirtschaftlicher Betrieb der Windenergieanlage auch bei schwachem Wind ermöglicht, und zwar ohne die Probleme der Verluste im Statorkreis der doppelt gespeisten Asynchronmaschine, die bei herkömmlichem Betrieb auftreten, und ohne dass der Umrichter im Rotorkreis speziell angepasst werden müsste.

Die Erfindung ermöglicht somit ohne großen technischen Aufwand gegenüber herkömmlichen Anlagen den wirtschaftlichen Betrieb von Windkraftanlagen sowohl bei normalen Windverhältnissen im üblichen Drehzahlregelbereich der doppelt gespeisten Asynchronmaschine als auch bei geringen Windverhältnissen, die durch das normale Betriebsverfahren nicht mehr wirtschaftlich abgedeckt werden können. Dadurch können Windkraftanlagen noch bei geringen Windstärken Energie erzeugen, wenn herkömmliche Windenergieanlagen aus Wirtschaftlichkeitsgründen bereits abgeschaltet werden müssen.

Die Umschaltung des Umrichters vom Rotorkreis auf den Statorkreis und zurück und die Trennung bzw. Wiederzuschaltung der Statorwicklung direkt auf das Netz kann durch Halbleiterschalter oder Schütze erfolgen. Die Halbleiterschalter oder Schütze können entweder direkt an der Drehstrommaschine in einem Anschlusskasten oder in einem Schaltschrank untergebracht sein, oder sie können von dieser entfernt in einem separaten Schaltschrank untergebracht sein.

In bekannten Windkraftanlagen ist es üblich, die Kabel zum Anschluss des Stators an das Stromnetz vom Generator an der Turmspitze der Anlage zu einem am Turmfuß angeordneten Schaltschrank zu führen, in dem oder in dessen Nähe der eigentliche Schalter zum Trennen des Stators vom Stromnetz angeordnet ist. Zweckmäßigerweise werden an dieser Stelle auch die genannten Halbleiterschalter oder Schütze zur Umschaltung der Maschine von der Betriebsart als doppelt gespeiste Asynchronmaschine (DGAM) in die Betriebsart Asynchronmaschine mit Kurzschlussläufer (AMK) angeordnet.

Die Erfindung betrifft auch eine Windkraftanlage, die zum Betrieb entsprechend dem erfindungsgemäßen Betriebsverfahren ausgerüstet und geeignet ist.

Ein Ausführungsbeispiel der Erfindung wird nachstehend anhand der beigefügten Zeichnung im einzelnen erläutert. In der Zeichnung zeigt
- Fig. 1: ein schematisches Schaltbild der erfindungsgemäßen doppelt gespeisten Drehstrommaschine mit Gleichspannungszwischenkreisumrichter im Rotorkreis und der Möglichkeit zur Umschaltung auf eine normale Asynchronmaschine mit Vollumrichter und
- Fig. 2: die Leistungskurve (Leistungskennlinie) einer erfindungsgemäßen Windkraftanlage.

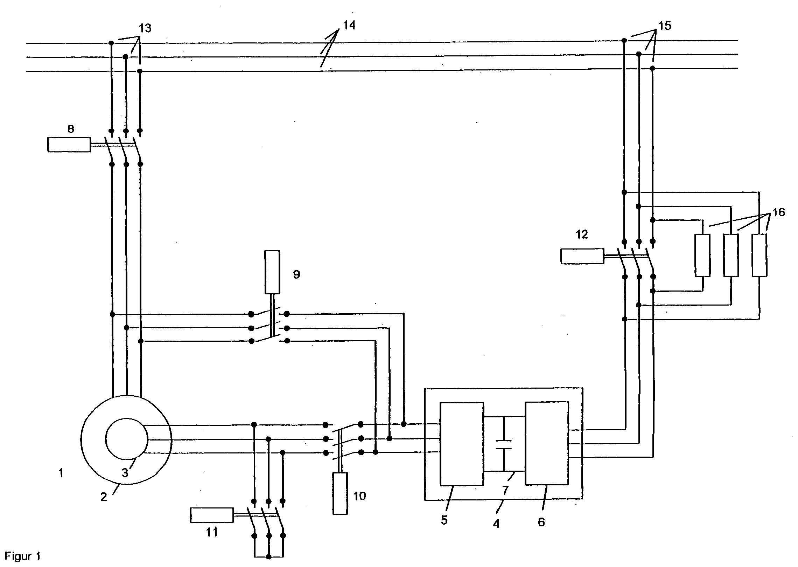

Fig. 1 zeigt das Schema einer erfindungsgemäßen doppelt gespeisten Asynchronmaschine 1 zum Betrieb als Generator in einer Windkraftanlage, wobei die Asynchronmaschine 1 einen Stator 2 und einen Rotor 3 umfasst. Der Stator 2 ist über einen Hauptschalter 8 über die Anschlusspunkte 13 mit dem Netz 14 verbunden. Der Rotor 3 ist über einen Schalter 10 mit dem Umrichter 4 im Rotorkreis verbunden. Dieser Umrichter 4 umfasst zwei Umrichtereinheiten 5, 6, nämlich einen rotorseitigen Pulswechselrichter 5 und einen netzseitigen Pulswechselrichter 6, die über einen Gleichspannungszwischenkreis 7 miteinander verbunden sind. Bei den Pulswechselrichtern 5 und 6 kann es sich um sogenannte IGBTs handeln.

Der netzseitige Pulswechselrichter 6 des Umrichters 4 ist über einen weiteren Hauptschalter 12 und einen Netzanschlusspunkt 15 mit dem Stromnetz 14 verbunden. Die Anschlusspunkte 13 und 15 können dabei auch identisch sein.

Parallel zum Hauptschalter 12 ist eine Vorladungsstrecke 16 geschaltet. Hierbei kann es sich zum Beispiel um ohmsche Widerstände handeln. Die Vorladungsstrecke 16 dient zur Vorladung des Zwischenkreises 7 des Umrichters 4 vor dem eigentlichen Zuschalten des Umrichters 4.

Im Rotorkreis ist ferner zwischen dem Rotor 3 und dem Schalter 10 ein weiterer Schalter 11 vorgesehen. Durch Schließen des weiteren Schalters 11 im Rotorkreis lässt sich der Rotor 3 kurzschließen. Er wird so zum Kurzschlussläufer.

Von der Leitung, die vom Stator 2 über den Hauptschalter 8 zum Stromnetz 14 führt, zweigen an einer Stelle zwischen dem Stator 2 und dem Hauptschalter 8 Leitungen ab, die zu den Leitungen vom Rotor 3 zum Umrichter 4 führen und in denen ein weiterer Schalter 9 vorgesehen ist. Der weitere Schalter 9 ermöglicht es, die Statorwicklung auf den rotorseitigen Wechselrichter 5 zu schalten.

Bei den in der Fig. 1 gezeigten Schaltern 8, 9, 10, 11 und 12 kann es sich um herkömmliche Schütze, aber auch um Halbleiter-basierte Schalter (Halbleiterschalter) handeln.

In einer besonders vorteilhaften Ausführungsform kann der Schalter 11 zum Kurzschließen der Rotorwicklung durch die sogenannte Crow Bar realisiert werden. In herkömmlichen Windkraftanlagen ist im Rotoreingang des Umrichters in der Regel eine sogenannte Crow Bar angeordnet. Hierbei handelt es sich um einen Thyristor-basierten Schalter zum Kurzschließen der Rotorwicklung. Die Crow Bar dient normalerweise zum Schutz des Umrichters vor Überspannungen, z.B. im Falle eines statorseitigen Netz- oder Wicklungskurzschlusses. In der vorgeschlagenen besonderen Ausführung der Erfindung wird die Crow Bar gleichzeitig als Schalter 11 zum Kurzschließen der Rotorwicklung genutzt.

Im Normalbetrieb der Anordnung als doppelt gespeiste Asynchronmaschine ist der Stator 2 über den geschlossenen Schalter 8 direkt an das Netz 14 angeschlossen. Der Schalter 9 ist geöffnet. Der Rotor 3 ist über den geschlossenen Schalter 10 mit dem rotorseitigen Wechselrichter 5 des Frequenzumrichters 4 verbunden. Der Schalter 11 ist geöffnet. Der netzseitige Wechselrichter 6 des Umrichters 4 ist über den geschlossenen Schalter 12 mit dem Netz 14 verbunden.

Bei schwachem Wind, der für einen untersynchronen Betrieb als doppelt gespeiste Asynchronmaschine nicht zu einer wirtschaftlichen Energiegewinnung ausreicht, wird die Anordnung für einen Betrieb als Asynchronmaschine mit Kurzschlussläufer und Vollumrichter umgeschaltet. In diesem Betriebsmodus wird der Schalter 10 geöffnet, so dass der Rotor 3 vom Umrichter 4 getrennt wird. Der Schalter 11 wird geschlossen, so dass der Rotor 3 kurzgeschlossen wird. Ferner wird der Schalter 8 geöffnet, so dass der Stator 2 vom Netz getrennt wird. Der Schalter 9 wird geschlossen, so dass der Stator 2 an den Wechselrichter 5 angeschlossen wird. Damit arbeitet der Umrichter 4 jetzt als Vollumrichter an einer Kurzschlussläufer-Asynchronmaschine. Der motorseitige Wechselrichter 5 arbeitet als Hochsetzsteller. Als Hochsetzstellerdrossel wird die Induktivität der Asynchronmaschine genutzt.

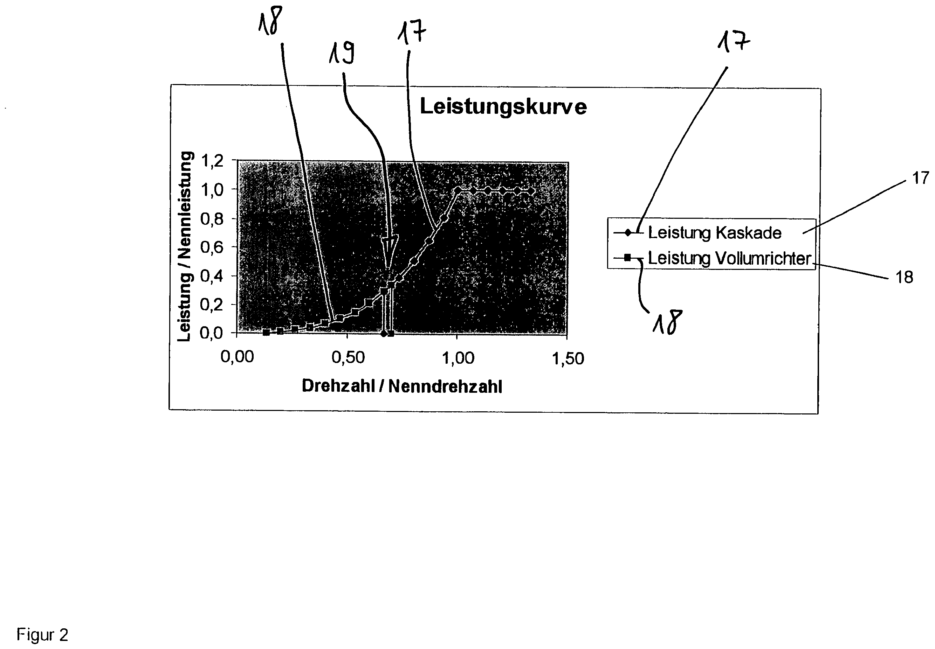

Dabei ergibt sich als Funktion der Windleistung in etwa der in Fig. 2 gezeigte Leistungsverlauf der Windkraftanlage. In der Leistungskurve gemäß Fig. 2 ist die auf eine Nennleistung bezogene Leistung (Leistung/Nennleistung) über der auf eine Nenndrehzahl bezogenen Drehzahl (Drehzahl/Nenndrehzahl) dargestellt.

Bei Windverhältnissen, die einen Betrieb im herkömmlichen Betriebsmodus erlauben, ergibt sich der Kurvenverlauf 17 für die abgegebene Leistung der Windkraftanlage im Normalbetrieb mit einer unteren Wirtschaftlichkeitsschranke 19 für den Betrieb. Im Ausführungsbeispiel der Figur 2 liegt die untere Wirtschaftlichkeitsschranke 19 bei etwa 900 Umdrehungen pro Minute. Unterhalb dieser Schranke 19 ist ein wirtschaftlicher Betrieb der Windkraftanlage als doppelt gespeiste Asynchronmaschine nicht mehr möglich.

Durch eine erfindungsgemäße Umschaltung der Asynchronmaschine in den Betriebszustand einer Kurzschlussläufer-Asynchronmaschine mit Vollumrichter am Stator wird jedoch auch dieser Leistungsbereich für eine wirtschaftliche Energieerzeugung ohne Änderung der Aufwendungen für den Umrichter der Anlage zugänglich, und es ergibt sich der in Fig. 2 dargestellte Leistungsverlauf 18 für die abgegebene Leistung der Windkraftanlage als Funktion der Drehzahl. Durch Verstellung des Anstellwinkels der Rotorblätter der Windkraftanlage wird dabei die Drehzahl der Windstärke angepasst und durch eine entsprechende Steuerung des Umrichters 4 die abgegebene Leistung gesteuert. Die Drehzahlbereiche der beiden Betriebszustände 17 und 18 als doppelt gespeiste Asynchronmaschine bzw. als Kurzschlussläufer-Asynchronmaschine mit Vollumrichter am Stator überschneiden sich, wie in Fig. 2 gezeigt. Dies definiert den Umschaltbereich 19 zwischen den beiden Betriebszuständen 17, 18. Der tatsächliche Umschaltzeitpunkt kann dabei je nach Steueralgorithmus der Windkraftanlage bei höheren oder niedrigeren Drehzahlen in diesem Umschaltbereich liegen.

Durch die Erfindung wird ein Verfahren zum Betrieb einer doppelt gespeisten Drehstrommaschine mit einem Gleichspannungszwischenkreisumrichter im Rotorkreis oder zum Betrieb einer Windkraftanlage mit einer doppelt gespeisten Drehstrommaschine und mit einem Gleichspannungszwischenkreisumrichter im Rotorkreis für einen drehzahlvariablen Betrieb geschaffen, bei dem die Drehstrommaschine bei normalem Betrieb bzw. die Windkraftanlage bei normalen Windverhältnissen im Normalbetrieb als doppelt gespeiste Asynchronmaschine betrieben wird und bei dem die Drehstrommaschine bei geringer Leistung bzw. bei geringem Wind, außerhalb eines wirtschaftlichen untersynchronen Arbeitsbereiches in dieser Anordnung, durch Trennen des Rotors vom Umrichter und Kurzschließen des Rotors und Umschalten des Stators vom Netz auf den Umrichter zu einer Asynchronmaschine mit Kurzschlussläufer umgeschaltet und in dieser Schaltung betrieben wird. Die erforderlichen Umschaltungen können durch Halbleiterschalter oder Schütze erfolgen. Die Halbleiterschalter oder Schütze zur Umschaltung können direkt in einem Anschlusskasten der Drehstrommaschine oder von dieser entfernt in einem Schaltschrank untergebracht sein. Der Umrichter kann entsprechend der aktuellen Betriebsart als Vollumrichter oder als Umrichter im Rotorkreis regelungstechnisch angepasst betrieben werden.

Durch die Erfindung wird ferner eine Windenergieanlage mit einer Drehstrommaschine und einem Gleichspannungszwischenkreisumrichter im Rotorkreis für einen drehzahlvariablen Betrieb geschaffen, bei der die Drehstrommaschine bei normalen Windverhältnissen im Normalbetrieb als doppelt gespeiste Asynchronmaschine betrieben wird und bei geringem Wind unterhalb des Bereichs eines wirtschaftlichen untersynchronen Arbeitsbereiches der doppelt gespeisten Asynchronmaschine durch Trennen des Rotors vom Umrichter und Kurzschließen des Rotors und Umschalten des Stators vom Netz auf den Umrichter zu einer Asynchronmaschine mit Kurzschlussläufer umgeschaltet und in dieser Schaltung betrieben wird. Die Umschaltung kann durch Halbleiterschalter oder Schütze erfolgen. Die Halbleiterschalter oder Schütze zur Umschaltung können direkt in einem Anschlusskasten der Drehstrommaschine oder von dieser entfernt in einem Schaltschrank untergebracht sein. Der Umrichter kann je nach Betriebsart als Vollumrichter oder als Umrichter im Rotorkreis entsprechend der aktuellen Betriebsart regelungstechnisch angepasst betrieben werden. Zum Kurzschließen der Rotorwicklung kann die sogenannte Crow Bar verwendet werden.

## Patentansprüche

1. Verfahren zum Betrieb einer doppelt gespeisten Drehstrommaschine (1), als Generator in einer Windkraftanlage, mit einem Gleichspannungszwischenkreisumrichter (4) im Rotorkreis, **dadurch gekennzeichnet, dass** die Drehstrommaschine (1) bei normaler Windleistung als doppelt gespeiste Asynchronmaschine und bei geringer Windleistung als Asynchronmaschine mit Kurzschussläufer betrieben wird und dass zum Betrieb der Drehstrommaschine als Asynchronmaschine mit Kurzschlussläufer der Rotor (3) vom Gleichspannungszwischenkreisumrichter (4) getrennt und kurzgeschlossen wird und der Stator (2) vom Netz (14) auf den Umrichter (4) umgeschaltet wird.

2. Verfahren nach Anspruch 1, **dadurch gekennzeichnet, dass** die erforderlichen Umschaltungen durch Halbleiterschalter oder Schütze erfolgen.

3. Verfahren nach Anspruch 1, **dadurch gekennzeichnet, dass** insbesondere das Kurzschließen des Rotors (3) durch die sogenannten Crow Bar (11) am rotorseitigen Eingang des Gleichspannungszwischenkreisumrichters (4) erfolgt.

4. Verfahren nach Anspruch 2, **dadurch gekennzeichnet, dass** die Halbleiterschalter oder Schütze in einem Anschlusskasten der Drehstrommaschine (1) oder von dieser entfernt in einem Schaltschrank untergebracht sind.

5. Verfahren nach einem der vorhergehenden Ansprüche, **dadurch gekennzeichnet, dass** der Umrichter (4) entsprechend der aktuellen Betriebsart als Vollumrichter oder als Umrichter im Rotorkreis regelungstechnisch angepasst betrieben wird.

6. Verfahren zum Betrieb einer Windkraftanlage mit einer doppelt gespeisten Drehstrommaschine (1), **dadurch gekennzeichnet, dass** die doppelt gespeiste Drehstrommaschine (1) nach dem Verfahren nach einem der Ansprüche 1 bis 5 betrieben wird.

7. Windkraftanlage mit einem Drehstromgenerator (1), und einem Gleichspannungszwischenkreisumrichter (4) im Rotorkreis zur Durchführung des Verfahrens nach einem der Ansprüche 1 bis 6, **gekennzeichnet durch** eine Umschalteinrichtung zur Umschaltung von einem Betrieb als doppelt gespeiste Asynchronmaschine auf einen Betrieb als Asynchronmaschine mit Kurzschlussläufer, die Schalter (8,9,10,11)
- zum Trennen des Stators (2) vom Netz (14),
- zum Anschließen des Stators (2) an einen Wechselrichter (5) des Umrichters (4),
- zum Trennen des Rotors (3) vom Umrichter (4) und
- zum Kurzschließen des Rotors (3)
umfasst.

8. Windkraftanlage nach Anspruch 7, **gekennzeichnet durch** einen Schalter (10) zum Trennen des Rotors (3) von dem Gleichspannungszwischenkreisumrichter (4), einen Schalter (11) zum Kurzschließen des Rotors (3), einen Schalter (8) zum Trennen des Stators (2) vom Netz (14) und einen Schalter (9) zum Verbinden des Stators (2) mit dem Gleichspannungszwischenkreisumrichter (4).

9. Windkraftanlage nach Anspruch 7 oder 8, **gekennzeichnet durch** Halbleiterschalter oder Schütze zum Umschalten von einem Betrieb als doppelt gespeiste Asynchronmaschine auf einen Betrieb als Asynchronmaschine mit Kurzschlussläufer.

10. Windkraftanlage nach Anspruch 7 oder 8, **dadurch gekennzeichnet, dass** insbesondere das Kurzschließen des Rotors (3) durch die sogenannte Crow Bar (11) am rotorseitigen Eingang des Gleichspannungszwischenkreisumrichters (4) erfolgt.

11. Windkraftanlage nach einem der Ansprüche 7 bis 10, **dadurch gekennzeichnet, dass** die Halbleiterschalter oder Schütze in einem Anschlusskasten der Drehstrommaschine (1) oder von dieser entfernt in einem Schaltschrank untergebracht sind.

## Claims

1. Method for operating a dual-feed three-phase machine (1), as a generator in a wind turbine, having a d.c. link converter (4) in the rotor circuit, **characterised in that** at normal wind power the three-phase machine (1) is operated as a dual-feed asynchronous machine and at low wind power as an asynchronous machine with a squirrel-cage rotor and that for operating the three-phase machine as an asynchronous machine with a squirrel-cage rotor the rotor (3) is isolated from the d.c. link converter (4) and short-circuited and the stator (2) is switched from the network (14) to the converter (4).

2. Method according to claim 1, **characterised in that** the necessary switching is effected by semiconductor switches or contactors.

3. Method according to claim 1, **characterised in that** in particular the short-circuiting of the rotor (3) is effected by the so-called crow bar (11) at the rotor-side input of the d.c. link converter (4).

4. Method according to claim 2, **characterised in that** the semiconductor switches or contactors are housed in a terminal box of the three-phase machine (1) or remotely therefrom in a switchgear cabinet.

5. Method according to one of the preceding claims, **characterised in that** the converter (4) is operated in a control-technology-adjusted manner in accordance with the current operating mode as a full converter or as a converter in the rotor circuit.

6. Method for operating a wind turbine having a dual-feed three-phase machine (1), **characterised in that** the dual-feed three-phase machine (1) is operated in accordance with the method according to one of claims 1 to 5.

7. Wind turbine having a three-phase generator (1), and a d.c. link converter (4) in the rotor circuit for performing the method according to one of claims 1 to 6, **characterised by** a switching device for switching from operation as a dual-feed asynchronous machine to operation as an asynchronous machine with a squirrel cage rotor, which comprises switches (8, 9, 10, 11)
- for isolating the stator (2) from the network (14),
- for connecting the stator (2) to an inverter (5) of the converter (4),
- for isolating the rotor (3) from the converter (4) and
- for short-circuiting the rotor (3).

8. Wind turbine according to claim 7, **characterised by** a switch (10) for isolating the rotor (3) from the d.c. link converter (4), a switch (11) for short-circuiting the rotor (3), a switch (8) for isolating the stator (2) from the network (14) and a switch (9) for connecting the stator (2) to the d.c. link converter (4).

9. Wind turbine according to claim 7 or 8, **characterised by** semiconductor switches or contactors for switching from operation as a dual-feed asynchronous machine to operation as an asynchronous machine with a squirrel cage rotor.

10. Wind turbine according to claim 7 or 8, **characterised in that** in particular the short-circuiting of the rotor (3) is effected by the so-called crow bar (11) at the rotor-side input of the d.c. link converter (4).

11. Wind turbine according to one of claims 7 to 10, **characterised in that** the semiconductor switches or contactors are housed in a terminal box of the three-phase machine (1) or remotely therefrom in a switchgear cabinet.

## Revendications

1. Procédé pour faire fonctionner une machine (1) à courant triphasé à double alimentation, comme génératrice dans une éolienne, comprenant un convertisseur (4) de circuit intermédiaire à tension continue du circuit de rotor, **caractérisé en ce que** l'on fait fonctionner la machine (1) à courant triphasé à une puissance du vent normale en machine asynchrone à double alimentation et à puissance du vent plus petite en machine asynchrone à induit de court-circuit et **en ce que**, pour faire fonctionner la machine à courant triphasé en machine asynchrone à courant de court-circuit, on sépare le rotor (3) du convertisseur (4) de circuit intermédiaire à tension continue et on le court-circuite et on commute le stator (2) du réseau (14) au convertisseur (4).

2. Procédé suivant la revendication 1, **caractérisé en ce que** les commutations nécessaires s'effectuent par des interrupteurs à semi-conducteur ou par des contacteurs.

3. Procédé suivant la revendication 1, **caractérisé en ce que**, notamment, le court-circuitage du rotor (3) s'effectue par ladite Crow Bar (11) à l'entrée du côté du rotor du convertisseur (4) de circuit intermédiaire à tension continue.

4. Procédé suivant la revendication 2, **caractérisé en ce que** les interrupteurs à semi-conducteur ou les contacteurs sont logés dans une caisse de connexion de la machine (1) à courant triphasé ou en en étant à distance dans une armoire de commande.

5. Procédé suivant l'une des revendications précédentes, **caractérisé en ce que** l'on fait fonctionner le convertisseur (4) de manière adaptée en technique de régulation en fonction du type de fonctionnement instantané en convertisseur complet ou en convertisseur du circuit du rotor.

6. Procédé pour faire fonctionner une éolienne ayant une machine (1) à courant triphasé à double alimentation, **caractérisé en ce que** l'on fait fonctionner la machine (1) à courant triphasé à double alimentation par le procédé suivant l'une des revendications 1 à 5.

7. Eolienne comprenant un alternateur (1) triphasé et un convertisseur (4) de circuit intermédiaire à tension continue du circuit du rotor pour effectuer le procédé suivant l'une des revendications 1 à 6, **caractérisée par** un dispositif de commutation pour la commutation d'un fonctionnement en machine asynchrone à double alimentation à un fonctionnement en machine asynchrone à induit de court-circuit, qui comprend des interrupteurs (8, 9, 10, 11)
- pour séparer le stator (2) du réseau (14),
- pour connecter le stator (2) à un onduleur (5) du convertisseur (4),
- pour séparer le rotor (3) du convertisseur (4) et
- pour court-circuiter le rotor (3).

8. Eolienne suivant la revendication 7, **caractérisée par** un interrupteur (10) pour séparer le rotor (3) du convertisseur (4) de circuit intermédiaire à tension continue, un interrupteur (11) pour court-circuiter le rotor (3), un interrupteur (8) pour séparer le stator (2) du réseau (14) et un interrupteur (9) pour connecter le stator (2) au convertisseur (4) de circuit intermédiaire à tension continue.

9. Eolienne suivant la revendication 7 ou 8, **caractérisé par** des interrupteurs à semi-conducteur ou des contacteurs pour passer d'un fonctionnement en machine asynchrone à double alimentation à un fonctionnement en machine asynchrone à induit de court-circuit.

10. Eolienne suivant la revendication 7 ou 8, **caractérisée en ce que**, notamment, le court-circuitage du rotor (3) s'effectue par ladite Crow Bar (11) à l'entrée du côté du rotor du convertisseur (4) de circuit intermédiaire à tension continue.

11. Eolienne suivant l'une des revendications 7 à 10, **caractérisée en ce que** les interrupteurs à semi-conducteur ou les contacteurs sont logés dans une caisse de connexion de la machine (1) à courant triphasé ou dans une armoire de commande, qui en est à distance.
